# EUROPEAN PATENT APPLICATION

(11) **EP 4 015 111 A1**
(43) Date of publication of application: **22.06.2022**
(21) Application number: 20215044.7
(22) Date of filing: 17.12.2020
(51) Int. Cl.: B22F 10/20, B22F 10/30, B22F 12/00, B29C 64/153, B29C 64/188, B29C 64/393, B33Y 10/00, B33Y 30/00, B33Y 50/02

(54) **VARIABLE LAYER THICKNESS ADDITIVE MANUFACTURING**

(71) Applicant: Siemens Energy Global GmbH & Co. KG, 81739 München (DE)
(72) Inventor: Bogner, Jan Pascal, 13357 Berlin (DE); Geisen, Ole, 14057 Berlin (DE); Purschke, Simon, 12209 Berlin (DE); Rule, David, 20537 Hamburg (DE); Jurisch, Martin, 14193 Berlin (DE)

(57) **Abstract**

A method of additive manufacturing a component (C) by powder bed fusion is presented, wherein the component (C) is built up layerwise by successively recoating powder layers of a base material (13) onto a build platform (10), wherein each powder layer is selectively irradiated by an energy beam (11), such as a laser beam, to melt and build up component layers (tₖₙ) for the component, wherein a layer thickness is varied from a first nominal layer thickness (t₁ₙ) in a first component section (1) to a second nominal layer thickness (t₂ₙ) in a second component section (2) during the manufacturing process, and wherein the first layer (l₂₁, l₃₁) for the second component section (2) is recoated at a corrected layer thickness (t₁₁, t₂₁, t₃₁) which equals to the difference of a steady-state powder layer thickness (tₛₛ) in the second component section (2) and a melt shrinkage length (s) in the first component section (1). Moreover, a related control apparatus as well as computer program product are provided.

## Description

The present invention relates to a method of additive manufacturing, such as powder bed fusion, with a varied or adapted layer thickness during the process. Moreover, corresponding computer controls and an accordingly manufactured component are provided.

Preferably, the component denotes a component of a turbo machine, e.g. applied in the flow path hardware of a gas turbine. The component is, thus, preferably made of a nickel- or cobalt-based superalloy, particularly a precipitation hardened alloy. In the alternative, the component may pertain to a high-performance component, such as a component applied in power generation, in the aviation or the automotive industry.

Additive manufacturing (AM) or 3D-printing techniques comprise e.g. powder-bed-fusion methods, such as selective laser melting (SLM) or laser powder bed fusion (LPBF), selective laser sintering (SLS) and electron beam melting (EBM).

A method of selective laser melting is described in EP 2 601 006 B1, for example.

Additive manufacturing, particularly powder-bed methods have proven to be useful and advantageous in the fabrication of prototypes or complex components, such as components with a mazelike or convoluted structure or functionally cooled components. Further, the additive manufacture stands out for its short chain of process steps which in turn enables material economization and a particularly low lead time.

Associated hardware, apparatuses or setups for such methods usually comprise a manufacturing or build platform on which the component is built layer-by-layer after the feeding of a layer of base material which may then be melted, e.g. by an energy beam, such as a laser, and subsequently densified and solidified. The layer thickness is determined by the relative position of a built piston and a recoater blade that moves, e.g. automatically, over the powder bed and removes excess material from a manufacturing plane or build space.

Typical layer thicknesses amount to between 20 µm and 40 µm. During the manufacture, said energy beam scans over the surface and melts the powder on selected areas which may be predetermined by a CAD-file ("Computer-Aided-Design") according to the geometry of the component to be manufactured. Said scanning or irradiation is preferably carried out in a computer-implemented way or via computer aided means, such as "Computer-Aided-Manufacturing" (CAM) instructions, which may be present in the form of a dataset. Said dataset or CAM-file may be or refer to a computer program or computer program product.

In LPBF it is usual that an available hardware features a scraper or recoater that is horizontally movable over a build platform or manufacturing plane in order to provide for every new powder layer. Usually the height or vertical position of such recoater is not varied but kept constant during the process. Instead the layer thickness is determined by the measure or reduction according to which the build platform or a built piston is lowered or moved after every recoating and/or irradiation step.

According to this functionality, a deviation, offset or mismatch between a nominal layer thickness and an actual layer thickness occurs for initial layers of the buildup as well as in situations in which the nominal layer thickness is changed during the additive manufacturing process. Said mismatch is correlated to a difference in structural density of a given powder-layer which may amount to below 70%, such as 50 to 60%, and an accordingly solidified (densified) melt-track leading to a structural density of 99% or more, such as 99.95%.

In case that the term "layer" or "layer thickness" is not specifically introduced to denote a given powder layer or an accordingly solidified layer of a melt track, said term(s) may logically relate to both cases, wherein, however, the actual situation can clearly be derived from the context.

Hence, it takes some layer recoating and irradiation (buildup) iterations until steady-state layer thickness or parity between the nominal layer thickness and the actual layer thickness is reached, or said measures converge. The latter may occur e.g. after five to ten (initial) layers or more, e.g. depending on the selected thickness value, i.e. until the offset becomes smaller than an inherent coating inaccuracy.

It is apparent that the presented problem occurs only in the initial stage of any buildup, or every time when the nominal selected layer thickness (determined by vertical position of the build plate) is changed during the process.

In conventional additive manufacturing processes, the layer thickness is not varied at all during the process because of the outlined divergences of a nominal in an actual thickness or a related coating artefact. As, in addition, the layer thicknesses in LPBF can be selected at a fairly good resolution, such variation is usually not needed. For complex geometries and/or highly performant materials to be additively established, variation of the layer thickness may, however, bring significant advantages in terms of structural merits and process efficiency.

Particularly the correction of the mentioned mismatch in the initial stage of any buildup or may have been tackled already by scaling the components dimensions or build job such that the mentioned "processes-inherent" artefacts - which would effectively shorten the established structure - are adjusted, wherein said adjustment may be achieved by numerical calculations. Therefore, usually a "z-scaling" is applied, wherein the components are slightly rescaled so that losses in vertical height are compensated.

In other words, parts or components manufactured out of a powder bed are usually finalized slightly shorter than intended by its digital data file, such as a CAD-dataset. As mentioned, the reason is that during the 3D-printing process, a steady-state powder layer thickness is only reached after a certain transient phase in which the process converges to a nominal layer thickness inherently.

With an improvement or enablement of a layer thickness variation, a main limitation for industrialization of additive manufacturing routes may be overcome.

It is, thus, an object of the present invention to provide means to solve the outlined difficulties.

The mentioned object is achieved by the subject-matters of the independent claims. Advantageous embodiments are subject-matter of the dependent claims.

An aspect of the present invention relates to a method of additive manufacturing a component by powder bed fusion, wherein the component is built up layerwise by successively recoating powder layers of a base material onto a build platform or substrate, wherein each (recoated) powder layer is selectively irradiated by an energy beam, such as a laser beam, to melt and establish component layers for the component, wherein a layer thickness is varied from a first nominal layer thickness in or for a first component section to a second nominal layer thickness in a, e.g. directly subsequent, second component section during the process.

Thereby, the first layer for the second component section is recoated at a corrected (nominal) layer thickness which equals to the difference of a steady-state powder layer thickness in the second component section and a melt shrinkage length in the first component section.

With this approach, advantageously, the outlined problems can be fully solved in that the given mismatch or transient phase of layer thickness "convergence" be circumvented for every situation in which the layer thickness is changed during the process. This is particularly due to the algorithm proposed for the given layer adaptation as outlined.

As a consequence, it may as well be prevented that layers established in the mentioned transition phase - i.e. the situation where the actual and the set values diverge - are solidified or processed at an inadequate parameter set. It is apparent that such an issue with dedicated process or irradiation parameters may lead to wastage of the whole component which may then miss its intended specifications in terms of structural performance and dimensional accuracy.

In yet other words, by using the inventive approach, it is assured that in every layer across the complete build job, the powder layer thickness is exactly the one for which the process parameters were selected or optimized for.

In an embodiment any nominal layer thickness, i.e. the nominal layer thicknesses of every section of the component, is each defined by a measure according to which a build platform is lowered after every recoating and/or irradiation step. According to the situation, the recoater height or vertical recoater position is, preferably, kept constant during the process.

In an embodiment the selective irradiation is carried out in the scope of a selective laser melting or electron beam melting process according to which the component is established along the vertical build direction, and wherein the component sections adjoin each other along said buildup direction. During the build job or manufacturing process, said buildup direction coincides with the vertical direction.

In an embodiment the melt shrinkage length or melt shrinkage is defined as the quotient of the respective nominal layer thickness (i.e. in the respective component section) and a packing density of the powder of the base material.

In an embodiment said packing density amounts to between 50% and 75%, such as 60%. In an ideal situation for equal spherical powder particles, a theoretical packing density would amount to around 74%. Any deviation from this value in a realistic additive manufacturing process may be caused by the powder size distribution as well as partial non-spherical powder particle geometries.

In an embodiment the first nominal layer thickness and/or the second nominal layer thickness are each chosen or set to a value between 10 µm and 100 µm.

In an embodiment a first nominal layer thickness is chosen to between 100 µm and 60 µm, such as 80 µm, and reduced to a second nominal layer thickness of between 59 µm and 10 µm, such as 40 µm or 20 µm. This embodiment may reflect an expedient layer thickness variation which may be advantageous for the efficiency of the additive manufacture as well as for a structural quality of the established component.

In an embodiment a first nominal layer thickness is chosen to between 10 µm and 59 µm, such as 20 µm or 40 µm, and increased to a second nominal layer thickness of between 60 µm and 100 µm, such as 80 µm. This embodiment may as well reflect an expedient layer thickness variation which may be advantages for the efficiency of the additive manufacture and for a structural quality of the established component.

In an embodiment a first nominal layer thickness is at first reduced and, later in the manufacturing process, increased again. This embodiment is e.g. advantageous for the process efficiency as well for the structural merit of the component when an intermediate component section needs to be established with at a greater spatial resolution, e.g. as compared to an initial and a final component section.

In an embodiment a first nominal layer thickness is at first increased and, later in the manufacturing process, reduced again.

In an embodiment a layer thickness of the first layer to be recoated or deposited for the component is corrected for a melt shrinkage. This situation relates to the initial stage of any given build job which also implies a mismatch or thickness divergence as mentioned above.

A further aspect of the present invention relates to a component manufactured according to the method as described. Due to the merits of the method, the component may be manufactured at the greater pace. Similarly, the component may be imparted with improved properties, be it in terms of dimensional accuracy or structural performance.

A further aspect of the present invention relates to a control apparatus being configured to carry out the variation of the layer thickness from first layer thickness to the second layer thickness as described.

A further aspect of the present invention relates to a computer program or computer program product comprising instructions which, when said program is executed by a computer control apparatus as mentioned, cause the latter to carry out the variation of the layer thickness from the first layer thickness to the second layer thickness.

A computer program product as referred to herein may relate to a computer program means media constituting or comprising a computer-readable storage medium (be it volatile and nonvolatile) like a memory card, a USB-stick, a CD-ROM, a DVD or a file downloaded or downloadable from a server or network. Such product may be provided by a wireless communication network or via transfer of the corresponding information by the given computer program, computer program product or the like. A computer program product may include or be included by a (non-transitory) computer-readable storage medium storing applications, programs, program modules, scripts, source code, program code, object code, byte code, compiled code, interpreted code, machine code, executable instructions, and/or the like.

In this regard, the mentioned computer program product may be, comprise or relate to CAM-data and in this way to the controls of the according additive manufacturing process.

Advantages and embodiments relating to the described method and/or the described control apparatus or computer program product may as well pertain or be valid with regard to the component itself.

Further features and advantageous embodiments become apparent from the following description of the exemplary embodiment in connection with the Figures.
Figure 1 shows a schematic sequence of cross-sectional images indicating principles of an additive manufacturing process.
Figure 2 indicates in a diagram an exemplary course of a layer thickness in an initial stage of an additive build job.
Figure 3 diagrammatically illustrates aspects and effects of a layer thickness mismatch in the course of an additive manufacturing process in which the layer thickness is varied.
Figure 4 shows - analogue to Figure 3 - an alternative embodiment of the course of an additive manufacturing process according to another embodiment of layer thickness variation.
Figure 5 indicates an inventive solution to aspects, like the ones indicated in Figure 3, in a similar diagram.
Figure 6 indicates an inventive solution to aspects, like the ones indicated in Figure 4, in a similar diagram.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

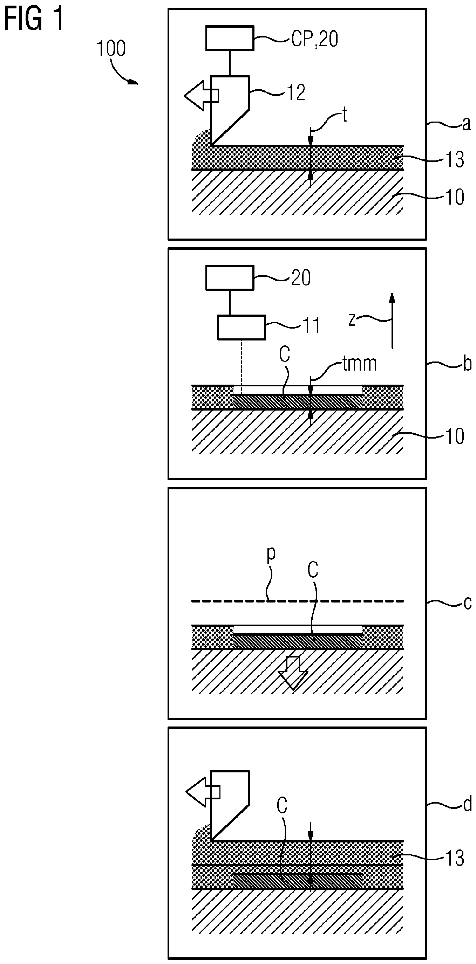

Figure 1 shows a sequence of cross-sectional sketches a, b, c and d, indicating a powder bed fusion, such as selective laser melting or electron beam melting, process for manufacturing a component C (cf. sub-images b, c and d). To this effect, any of the pictures show schematically only a part of a conventional additive manufacturing device 100.

The component C as referred to herein may particularly relate to a part or an article of complex shape, such as with filigree portions of structures. Preferably, said component is made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The component C is manufactured layerwise out of a powder bed 13 and onto a build plate 10.

In part "a", a powder layer with a thickness t is shown which has been freshly deposited or recoated onto a surface of the build plate or platform 10 by a recoater 12. Said recoater or blade 12 therefore preferably moves horizontally, such as in x/y-direction, over the build plate 10, wherein a certain distance is maintained which defines a (powder) thickness t. Said recoater 12 is preferably operated at a constant vertical position along the z-direction. This direction constitutes the build direction according to which the component C is built up layerwise.

Any adjustment of the layer thickness is conventionally carried out by a lowering the build plate 10 as compared to the recoater blade 12.

The recoater 12 is preferably coupled or connected to a control unit 20 or processor. The same holds preferably for the build plate 10 or its controls and further components of the device 100.

Part "b" of this Figure indicates the next step, wherein the recoated layer is selectively solidified by an energy beam 11, such as a laser or electron beam. According to a predefined geometry, such as a CAD-dataset, the powder is, thus, irradiated and densified in order to form the structure of the respective layer.

As a consequence of a melt shrinkage, the resulting thickness of the molten material structure tₘₘ is smaller than the powder layer thickness t. A respective shrinkage or shrinkage length (cf. s further below) may be determined by a recoater height as well as by a powder packing density dₚ which usually amounts to between 50% to 75%, such as 60%, for example.

A solidified track of "remelted" material track (solidified layer), however, comprises an almost dense material with a density of usually greater than 98 %, such as 99.95%.

In part "c" of Figure 1 it is additionally indicated that build platform 10 is lowered as indicated by the downward-facing arrow. Moreover, a processing plane p is indicated. Said plane p is preferably the plane according to which the recoater blade or its tip is displaced for the distribution of any new powder layer.

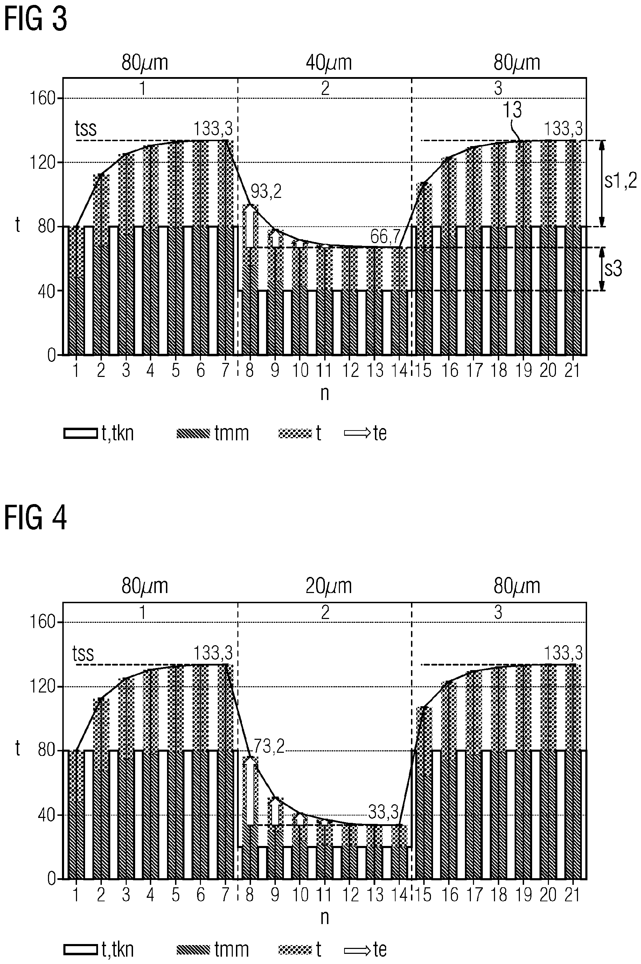

It is apparent that a subsequent recoating step leads to the situation as shown in part "d", i.e. a newly distributed powder layer with a thickness greater than t on top of the as manufactured structure C (for more details, see Figures 3 onwards below).

Conventional process settings do usually not account for the mentioned artefact, i.e. that - once a nominal (powder) layer thickness has been selected - an actual (powder) layer thickness deviates from said set value by a value greater than the shrinkage (cf. Figures 3 and 4 below). This leads to dimensional inaccuracy along the z-direction, particularly shortening, of the component C.

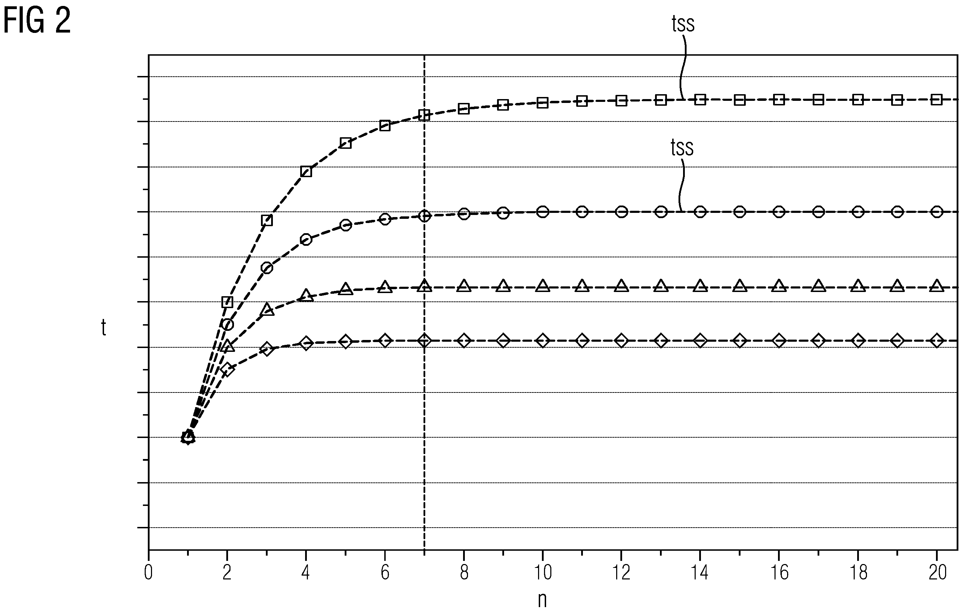

The diagram of Figure 2 shows for several exemplary layer thicknesses that the described deficiency arises roughly during an initial or transient phase in any build job of usually seven to ten layers. Only after this stage, e.g. of n=7 layers for the component, an equilibrium or "steady" state in the powder layer thickness is attained. Such transient phase thus falsifies the set geometry of the component C.

For example, the layer thickness is set to 80 µm. That means the very first layer has a powder layer thickness of 80pm, when it is exposed it possibly shrinks to 80 µm * 60 % = 48 µm as this measure may be reduced by the related melt shrinkage length s (see below). As indicated said length s preferably equals to the quotient of the given steady-state powder layer thickness (cf. tₛₛ below) and the according packing density dₚ.

Above the solidified material in figure part "d" a powder layer height of 80 µm + 48 µm - 80 µm = 112 µm for the second layer will result.

After about seven to ten layers as mentioned, a steady-state is reached and the process is "steady", building up 80 µm solid layers, while a recoating powder layer thickness of t, tₛₛ = 133 µm is recoated above the already exposed material layers, respectively. Again, that means that the transient phase leads to slight "shortening" of the component C, since the device 100 does not compensate for these phenomena at all.

Figure 3 diagrammatically further illustrates aspects and effects of such layer thickness mismatch in the course of an additive manufacturing process in which the layer thickness is varied during the process.

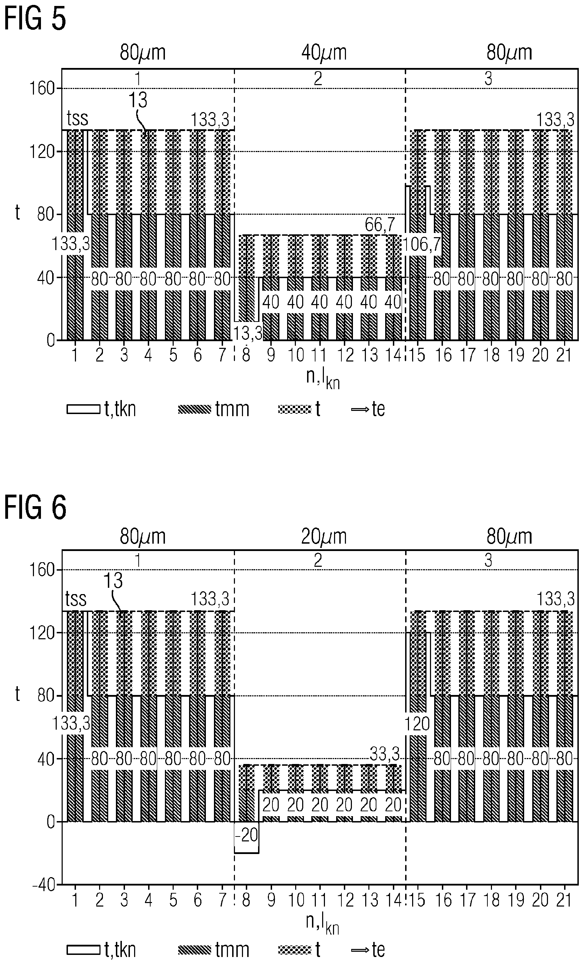

The type of the diagrams of Figures 3 to 6 are somewhat similar and of the same type, whereas the effects on the solution of the present invention becomes rather apparent from Figures 5 and 6.

An x-coordinate of Figure 3 (cf. also the following Figures) indicates the serial number n of layers for any given build job from 1 to 21.

An additive buildup or manufacturing process sequence for the component C is exemplarily divided in three sections, i.e. an initial section 1, an intermediate section 2 and a final section 3 for the sake of simplicity. Of course, the component C realistically comprises much more layers, i.e. maybe thousands or tens of thousands of layers.

Numerals lₖₙ shall specifically indicate the layers and tₖₙ related layer thicknesses, wherein k shall indicate the serial number of the sections (three shown exemplarily) of the component C and n the serial number of layers (seven shown exemplarily) in each section.

The first layer l₁₁ is coated with a nominal thickness t or t11 of e.g. 80 µm. Due to the mentioned melt shrinkage, a resulting layer thickness tₘₘ of the molten material amounts to 80 µm reduced by 60%, i.e. 48 µm (cf. above).

The situation for the second layer l₁₂ to be deposited and densified was already partly described above, leading to an overall thickness T of 112 µm. The actual thickness t for layers l₁₃, l₁₄, l₁₅ and l₁₆ can be calculated analogously, wherein approximately a steady-state is reached for the seventh layer l₁₇ at which layer thickness t converges to the steady-state powder layer thickness tₛₛ = 133 µm in section 1.

Thereby, the difference between the overall or actual powder layer thickness t and an actual (structural) layer thickness tₘₘ is determined by the packing density of the given powder material 13, as introduced above.

This convergence of the thickness t towards tₛₛ is inherent to the additive layerwise process, and not subject to any nominal layer thickness adjustment, or the like. In other words, during the first seven layers, the measure according to which the build plate piston is lowered is always 80 µm. Analogous conclusions hold for the second section 2 and the third section 3 of the component C as shown in Figure 3. It is e.g. apparent that - at the transition from layer l₁₇ to layer L₂₁ (referred to also as layer n=8) - the nominal layer thickness, which is adjusted via the reduction of the build plate 10, is switched from 80 µm to 40 µm. Such variation may e.g. be important when a component needs to be "printed" with variable layer thickness.

When e.g. switching from a higher to a lower layer thickness the situation is opposite, and the nominal powder layer thickness t exceeds the steady-state powder layer thickness tₛₛ in the given transition zone (cf. layers 8 to 14 in section 2). The exceeding layer thickness is indicated by numeral tₑ. Summing up the arrows indicating tₑ should lead to the overall inaccuracy accumulated in section 2 of the component C.

In addition to geometric inaccuracies, the mismatch may lead to increased defect densities, as a process parameter is optimized for a given steady-state powder layer thickness only.

The steady-state powder layer thickness in section 2 amounts to tₛₛ of 66.7 µm, whereas the steady-state powder layer thickness in section 3 equals to that one of the first section 1.

Because of the outlined transient phase and related artefacts, it was basically impossible to switch e.g. from an 80 µm to 20 µm layer thickness in a single step without risking severe defects in the resulting structure, such as due to a parameter "mismatch" and thus a poor structural quality of the component C.

This situation is shown in more detail by way of Figure 4 from which it is apparent that the mentioned transition or inaccuracies manifest even stronger when the variation in the nominal (powder) layer thickness increases. Here, a switch from a 80 µm to a 20 µm process is handled.

Figures 5 and 6 now indicate a solution to the mentioned issues by means of the present invention which pertains to a method of additive manufacturing the component C by powder bed fusion, as described.

It is apparent that already the first layer L₁₁ in Figure 5 is corrected for an according melt shrinkage in that only for said first layer L₁₁ the nominal layer thickness t₁₁ is set to the steady-state thickness of 133.33 µm which in turn equals to a value of 80 µm divided by the powder packing density. The remaining layers in the first section, i.e. layers L₂₁ to l₁₆ - on the other hand - are not corrected but set or left to/at the conventional value of piston movement, i.e. 80 µm.

In the examples given here, the packing density d_{P} is selected to 60 %. Without loss of generality said value may of course be set to any other expedient value, such as to a value derived from experiments or simulations.

Said correction for the first layer L₁₁ renders a correction of the following layers in section 1 obsolete and achieves that the given offset and convergence phase of layer thicknesses to a steady-state value does not occur.

When, after layer l₁₇, a powder thickness is "switched" from 80 µm to 40 µm, a correction of the first layer of the next section l₂₁ is conducted in the same way i.e. in that the layer thickness is varied from a first nominal layer thickness t₁₇ in the first component section 1 to the second nominal layer thickness t₂₁ in the second component section 2 during the manufacturing process, wherein said first layer is recoated at a corrected layer thickness which equals to the difference of a steady-state powder layer thickness tₛₛ in the second component section 2 and a melt shrinkage length s in the first component section 1 (cf. above), i.e. t₂₁ = 13.3 pm.

As shown in Figure 5 the first nominal layer thickness t₁ₙ in the first section 1 are chosen to an exemplary value of 80 µm, and reduced to a second nominal layer thickness t₂ₙ of 40 µm in the second section 2.

Lateron, the second nominal layer thicknesses t₂ₙ is increased to a third nominal layer thickness in the third section 3 t₃ₙ of 80 µm again. This is done in an analogous way and leads to a corrected layer thickness (n=15) t₃₁ of 106.7 µm.

Particularly, as compared to Figure 3, solely the first layers t₁₁, t₂₁ and t₃₁ are corrected or adapted such that the mentioned mismatch issues are overcome.

The only parameter that needs to be derived or approximated is finally the powder (packing) density dₚ (cf. above). Then, any associated device could implement the respectively corrected powder layer thickness or height as initial thickness in each of the sections.

In other words, the corrected layer thicknesses t₂₁ and t₃₁ between sections are applicable to all following transitions, respectively. Applying these adjusted values to the shown example, using three sections with seven layers each, the powder layer thickness curve in the transitions can be held constant.

The first nominal layer thickness t₁ₙ and the second nominal layer thickness t₂ₙ are preferably each chosen between 10 µm and 100 µm.

With these instructions, a skilled operator can readily apply the inventive solution to any realistic additive build job, such as with amended values for the nominal thicknesses, powder densities or fractions.

To this effect, Figure 6 shows another possible example of an expedient layer thickness variation during the AM-process.

As shown in Figure 6 the first nominal layer thicknesses t₁ₙ is chosen to the same exemplary value of 80 µm, and then however, reduced to a second nominal layer thickness t₂ₙ of only 20 µm. Thus, the intermediate section 2 can - according to this embodiment - be established with a far improved structural quality and dimensional accuracy. A print time will indeed increase in section 2. But as said section or according scanning strategies can - thanks to the presented solution - now be tailored in any possible way, parameter spaces in AM and therewith also material properties may be significantly improved.

Furthermore, the second nominal layer thickness t₂ₙ is expediently chosen to 20 µm, and increased again to the third nominal layer thickness t₃ₙ of 80 µm. This is just to indicate an example, wherein the first and the third section are structurally or dimensionally not as crucial as the second section, and can be manufactured faster.

As shown in this example, the result of the algorithm describing the corrected first layer between sections can indeed turn negative, if the difference between the steady-state thickness and the thickness of the melted material is bigger than the steady-state thickness of the following section. This is shown in the first layer n=8 in the second section 2 in that a thickness t₂₁ is set to -20 µm. In this case, the build platform 10 is not lowered but lifted again by 20 µm for the recoater to remove the powder surplus.

Aside from the described parameter values, different values might of course as well be chosen. Generally, nominal layer thicknesses in any section may e.g. be set to between 100 µm and 60 µm, or below, i.e. between 59 µm and 10 µm.

## Claims

1. Method of additive manufacturing a component (C) by powder bed fusion, wherein the component (C) is built up layerwise by successively recoating powder layers of a base material (13) onto a build platform (10), wherein each powder layer is selectively irradiated by an energy beam (11), such as a laser beam, to melt and establish component layers (tₖₙ) for the component, wherein a layer thickness is varied from a first nominal layer thickness (t₁ₙ) in a first component section (1) to a second nominal layer thickness (t₂ₙ) in a second component section (2) during the manufacturing process, wherein the first layer (l₂₁, l₃₁) for the second component section (2) is recoated at a corrected layer thickness (t₁₁, t₂₁, t₃₁) which equals to the difference of a steady-state powder layer thickness (tₛₛ) in the second component section (2) and a melt shrinkage length (s) in the first component section (1).

2. Method according claim 1, wherein any nominal layer thickness (tₖₙ) is defined by a measure according to which a build platform (10) is lowered after every recoating and/or irradiation step.

3. Method according claim 1 or 2, wherein the selective irradiation is carried out in the scope of a selective laser melting or electron beam melting process according to which the component (C) is established along a build direction (z), and wherein the component sections adjoin each other along said buildup direction (z).

4. Method according to one of the previous claims, wherein the melt shrinkage length (s) is defined as the quotient of the respective nominal layer thickness (tkn) and a packing density (dₚ) of the powder (13) of the base material.

5. Method according claim 4, wherein the packing density (dₚ) of the powder (13) of the base material amounts to between 50 % and 75 %.

6. Method according to one of the previous claims, wherein the first nominal layer thickness (t₁ₙ) and the second nominal layer thickness (t₂ₙ) are each chosen between 10 µm and 100 µm.

7. Method according to one of the previous claims, wherein a first nominal layer thickness (l₁ₙ) is chosen to between 100 µm and 60 µm, such as 80 µm, and reduced to a second nominal layer thickness (t₂ₙ) of between 59 µm and 10 µm, such as 40 µm or 20 µm.

8. Method according to one of the previous claims, wherein a first nominal layer thickness (t₁ₙ) is chosen to between 10 µm and 59 µm, such as 20 µm or 40 µm, and increased to a second nominal layer thickness (t₂ₙ) of between 60 µm and 100 µm, such as 80 µm.

9. Method according to one of the previous claims, wherein a first nominal layer thickness (t₁ₙ) is at first reduced and, later in the manufacturing process increased again, or vice versa.

10. Method according to one of the previous claims, wherein a layer thickness (t₁₁) of the first layer (l₁₁) to be recoated for the component is corrected for a melt shrinkage (s).

11. Component (C) manufactured according to the method of one of the previous claims.

12. Control apparatus (20) being configured to carry out the variation of the layer thickness from a first nominal layer thickness (t₁ₙ) to a second nominal layer thickness (t₂ₙ) according to the method of one of claims 1 to 10.

13. Computer program product (CP) comprising instructions which, when the program is executed by a computer or control apparatus (20), cause said means to carry out the variation of the layer thickness from a first nominal layer thickness (t₁ₙ) to a second nominal layer thickness (t₂ₙ) according to the method of one of claims 1 to 10.
